# EUROPEAN PATENT APPLICATION

(11) **EP 4 730 811 A1**
(43) Date of publication of application: **22.04.2026**
(21) Application number: 25200309.0
(22) Date of filing: 04.09.2025
(51) Int. Cl.: H04N 21/2187, H04N 21/234, H04N 21/8352

(54) **LIVE PROGRAM DEDUPLICATION USING VIDEO FINGERPRINTING**

(30) Priority: 16.10.2024 US 202418917076
(71) Applicant: Roku, Inc., San Jose, CA 95110 (US)
(72) Inventor: SARAIYA, Shailin, San Jose, 95110 (US); HAN, Yiming, San Jose, 95110 (US)
(74) Representative: Yang, Shu

(57) **Abstract**

Disclosed herein are system, method and/or computer program product embodiments, and/or combinations thereof, for deduplication of live programming. An embodiment generates a plurality of video on demand (VOD) hash character strings corresponding to a plurality of VOD programs. The embodiment also generates a plurality of live-video hash character strings corresponding to a live video program. The embodiment then determines a match measure between the plurality of live-video hash character strings and a plurality of VOD hash character strings corresponding to the plurality of VOD programs. The embodiment performs deduplicating of the live video program based on a determination that the match measure exceeds a threshold value. The embodiment then transmits the live video program by assigning metadata corresponding to the VOD program of the plurality of VOD programs to the live video program.

## Description

This patent application claims the benefit of and priority to U.S. Non-Provisional Patent Application No. 18/917,076, filed on October 16, 2024.

### BACKGROUND

### FIELD

This disclosure is generally directed to multimedia content delivery systems, and more particularly to performing live program deduplication using video fingerprinting of live and video on demand (VOD) programming.

### SUMMARY

Provided herein are system, apparatus, article of manufacture, method and/or computer program product embodiments, and/or combinations and sub-combinations thereof, for deduplication of live video programs using video fingerprinting.

Some aspects of this disclosure relate to a method for deduplication of live programming. According to some aspects, the method includes generating a respective plurality of VOD hash character strings corresponding to a plurality of VOD programs. According to some aspects, a plurality of live-video hash character strings corresponding to a live video program are also generated. According to some aspects, a match measure between the plurality of live-video hash character strings and a plurality of VOD hash character strings of the respective plurality of VOD hash character strings corresponding to a VOD program of the plurality of VOD programs is then determined. According to some aspects, deduplication of the live video program is performed based on a determination that the match measure exceeds a threshold value. The live video program is then transmitted by assigning metadata corresponding to the VOD program of the plurality of VOD programs to the live video program.

According to some aspects, generating the respective plurality of VOD hash character strings corresponding to the plurality of VOD programs includes sampling the VOD program of the plurality of VOD programs at a first sampling rate to generate a plurality of VOD frames, generating a plurality of VOD resized grey scale images corresponding to the plurality of VOD frames, and generating the plurality of VOD hash character strings by computing a respective hash of each of the plurality of VOD resized grey scale images. According to some aspects, generating the plurality of live-video hash character strings corresponding to the live video program includes recording a portion of the live video program and sampling the portion of the live video program at a second sampling rate to generate a plurality of live-video frames. According to some aspects, the method further includes generating a plurality of live-video resized greyscale images corresponding to the plurality of live-video frames and generating the plurality of live-video hash character strings by computing a respective hash of each of the plurality of live-video resized grey scale images.

According to some aspects, the match measure corresponds to a count of matches between the plurality of live-video hash character strings and a portion of the plurality of VOD hash character strings of the respective plurality of VOD hash character strings. According to some aspects, the plurality of live-video hash character strings and a portion of the plurality of VOD hash character strings of the respective plurality of VOD hash character strings are computed using a perceptual hash algorithm. According to some aspects, deduplicating the live video program includes replacing a content identifier corresponding to the live video program with a content identifier corresponding to the VOD program of the plurality of VOD programs. According to some aspects, the content identifier corresponding to the VOD program is a Gracenote identifier.

### BRIEF DESCRIPTION OF THE FIGURES

The accompanying drawings are incorporated herein and form a part of the specification.
FIG. 1 illustrates a block diagram of a multimedia environment, according to some embodiments.
FIG. 2 illustrates a block diagram of a streaming media device, according to some embodiments.
FIG. 3 illustrates a block diagram of an example system for indexing and storing video image hashes corresponding to the VOD content, according to some embodiments.
FIG. 4 illustrates a block diagram of an example of an example video fingerprinting worker, according to some embodiments.
FIG. 5 illustrates examples of video fingerprints generated using a perceptual hashing algorithm, according to some embodiments.
FIG. 6 illustrates a block diagram of an example system for deduplication of live video content, according to some embodiments.
FIG. 7 illustrates a flow diagram of a method for deduplication of live programming, according to some embodiments, according to some embodiments.
FIG. 8 illustrates an example computer system useful for implementing various embodiments.

In the drawings, like reference numbers generally indicate identical or similar elements. Additionally, generally, the left-most digit(s) of a reference number identifies the drawing in which the reference number first appears.

### DETAILED DESCRIPTION

Provided herein are system, apparatus, article of manufacture, method and/or computer program product embodiments, and/or combinations and sub-combinations thereof, for deduplication of live video programs using video fingerprinting. For example, aspects herein describe live program deduplication by computing hash values corresponding to live and video on demand (VOD) programs.

The sheer volume of media content made available by modern content management systems can be overwhelming for content delivery systems. Metadata in electronic program guides (EPGs) plays a crucial role in deduplicating content during content delivery. Another function of metadata is to allow viewers to search for and filter content efficiently. Metadata in EPGs can include program metadata such as program title, episode title, synopsis, genre, air date and time, duration, cast and crew, episode number, season number, ratings, language, subtitles, and parental guidance information. The metadata can also include technical metadata such as audio format (e.g., stereo, Dolby digital), video format (e.g., standard definition, high definition, 4K), aspect ratio (e.g., 16:9, 4:3), integration with TV-anytime, DVB-SI, and ATSC standards. Including detailed metadata enables users to efficiently find the specific content they are interested in.

A multimedia content delivery system may receive the same video from more than more than one of these media content providers. For example, a video program that is available as part of the VOD catalog may also be received as a live stream from a live content provider. Although it is the same video program, since they are obtained from different content providers, the live program and the VOD program may be assigned different content identifiers (e.g., Gracenote IDs), and the live video program and the VOD program may be linked to respective copies of metadata corresponding to the video program. Generally, the metadata received from live content providers, by a multimedia content delivery system, can be of poor quality and inadequate, compared to the metadata received from VOD content providers. Missing or inaccurate metadata in EPGs can significantly diminish the ability to deduplicate live content as well as the content discovery experience. Accordingly, what is needed are approaches to associate live programs received from live content providers with better quality metadata.

Aspects of this disclosure address the above technical problem by presenting image hashing techniques and mechanisms that improve the efficiency of live content deduplication by matching a live program with its corresponding VOD program, and replacing the inadequate metadata received from live content providers with metadata from respective VOD content. According to some aspects, video fingerprints corresponding to a live video program are matched to video fingerprints corresponding to a VOD program. A content identifier corresponding to the live video program is swapped with a content identifier corresponding to the matched VOD program, enabling tagging the live video program with the metadata corresponding to the VOD program. According to some aspects, the video fingerprints are generated using a perceptual hashing algorithm such as difference hash (dHash).

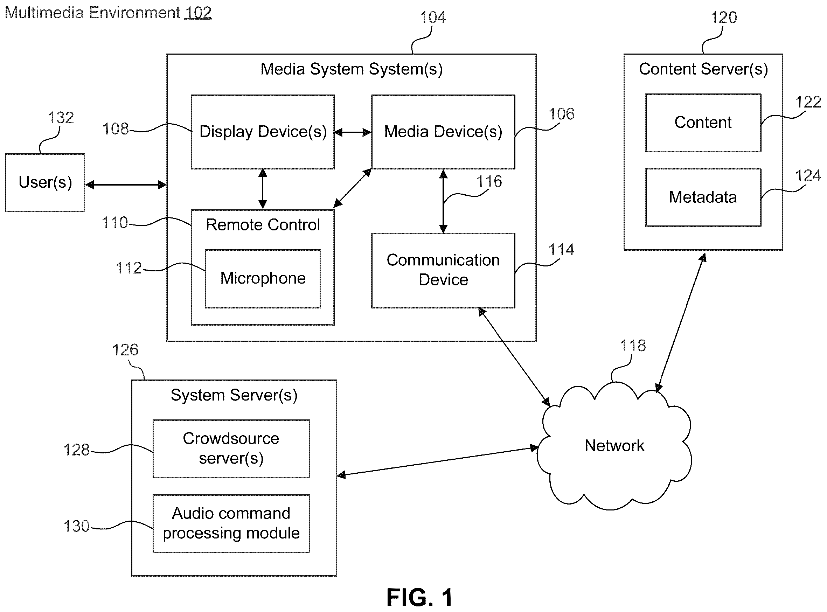

Various aspects of this disclosure may be implemented using and/or may be part of a multimedia environment 102 shown in FIG. 1. It is noted, however, that multimedia environment 102 is provided solely for illustrative purposes, and is not limiting. Embodiments of this disclosure may be implemented using and/or may be part of environments different from and/or in addition to the multimedia environment 102, as will be appreciated by persons skilled in the relevant art(s) based on the teachings contained herein. An example of the multimedia environment 102 shall now be described.

### Multimedia Environment

FIG. 1 illustrates a block diagram of a multimedia environment 102, according to some embodiments. In a non-limiting example, multimedia environment 102 may be directed to streaming media. However, this disclosure is applicable to any type of media (instead of or in addition to streaming media), as well as any mechanism, means, protocol, method and/or process for distributing media.

Multimedia environment 102 may include one or more media systems 104. A media system 104 could represent a family room, a kitchen, a backyard, a home theater, a school classroom, a library, a car, a boat, a bus, a plane, a movie theater, a stadium, an auditorium, a park, a bar, a restaurant, or any other location or space where it is desired to receive and play streaming content. User(s) 132 may operate with the media system 104 to select and consume content.

Each media system 104 may include one or more media devices 106 each coupled to one or more display devices 108. It is noted that terms such as "coupled," "connected to," "attached," "linked," "combined" and similar terms may refer to physical, electrical, magnetic, logical, etc., connections, unless otherwise specified herein.

Media device 106 may be a streaming media device, DVD or BLU-RAY device, audio/video playback device, cable box, and/or digital video recording device, to name just a few examples. Display device 108 may be a monitor, television (TV), computer, smart phone, tablet, wearable (such as a watch or glasses), appliance, internet of things (IoT) device, and/or projector, to name just a few examples. In some embodiments, media device 106 can be a part of, integrated with, operatively coupled to, and/or connected to its respective display device 108. In some embodiments, image capturing device 134 may be operatively coupled to, and/or connected to media system 104 and communicate to content server(s) 120 and/or system server(s) 126 via media system 104. In some aspects, image-capturing device 134 may communicate directly with content server(s) 120 and/or system server(s) 126 without needing to communicate via media system 104.

Each media device 106 may be configured to communicate with network 118 via a communication device 114. Communication device 114 may include, for example, a cable modem or satellite TV transceiver. Media device 106 may communicate with communication device 114 over a link 116, wherein link 116 may include wireless (such as Wi-Fi) and/or wired connections.

In various embodiments, network 118 can include, without limitation, wired and/or wireless intranet, extranet, Internet, cellular, Bluetooth, infrared, and/or any other short range, long range, local, regional, global communications mechanism, means, approach, protocol and/or network, as well as any combination(s) thereof.

Media system 104 may include a remote control 110. Remote control 110 can be any component, part, apparatus and/or method for controlling media device 106 and/or display device 108, such as a remote control, a tablet, laptop computer, smartphone, wearable, on-screen controls, integrated control buttons, audio controls, or any combination thereof, to name just a few examples. In an embodiment, remote control 110 wirelessly communicates with media device 106 and/or display device 108 using cellular, Bluetooth, infrared, etc., or any combination thereof. Remote control 110 may include a microphone 112, which is further described below.

Multimedia environment 102 may include a plurality of content servers 120 (also called content providers, channels or sources). Although only one content server 120 is shown in FIG. 1, in practice multimedia environment 102 may include any number of content servers 120. Each content server 120 may be configured to communicate with network 118.

Each content server 120 may store content 122 and metadata 124. Content 122 may include any combination of music, videos, movies, TV programs, multimedia, images, still pictures, text, graphics, gaming applications, advertisements, programming content, public service content, government content, local community content, software, and/or any other content or data objects in electronic form. According to some aspects, content server 120 may include a live content server and a VOD content server, each tagged their own metadata for their respective content.

In some embodiments, metadata 124 comprises data about content 122. For example, metadata 124 may include associated or ancillary information indicating or related to writer, director, producer, composer, artist, actor, summary, chapters, production, history, year, trailers, alternate versions, related content, applications, and/or any other information pertaining or relating to content 122. Metadata 124 may also or alternatively include links to any such information pertaining or relating to content 122. Metadata 124 may also or alternatively include one or more indexes of content 122. Metadata 124 may include metadata associated with VOD programs received from various VOD content providers. Metadata 124 may also include cached Metadata provided by live content providers.

Multimedia environment 102 may include one or more system servers 126. System servers 126 may operate to support media devices 106 from the cloud. It is noted that the structural and functional aspects of system servers 126 may wholly or partially exist in the same or different ones of system servers 126.

The media devices 106 may exist in thousands or millions of media systems 104. Accordingly, the media devices 106 may lend themselves to crowdsourcing embodiments and, thus, the system servers 126 may include one or more crowdsource servers 128.

For example, using information received from the media devices 106 in the thousands and millions of media systems 104, the crowdsource server(s) 128 may identify similarities and overlaps between closed captioning requests issued by different users 132 watching a particular movie. Based on such information, the crowdsource server(s) 128 may determine that turning closed captioning on may enhance users' viewing experience at particular portions of the movie (for example, when the soundtrack of the movie is difficult to hear), and turning closed captioning off may enhance users' viewing experience at other portions of the movie (for example, when displaying closed captioning obstructs critical visual aspects of the movie). Accordingly, the crowdsource server(s) 128 may operate to cause closed captioning to be automatically turned on and/or off during future streaming of the movie.

The system servers 126 may also include an audio command processing module 130. As noted above, remote control 110 may include microphone 112. Microphone 112 may receive audio data from users 132 (as well as other sources, such as the display device 108). In some embodiments, media device 106 may be audio responsive, and the audio data may represent verbal commands from user 132 to control media device 106 as well as other components in media system 104, such as display device 108.

In some embodiments, the audio data received by microphone 112 in remote control 110 is transferred to media device 106, which then forwards the audio data to audio command processing module 130 in system servers 126. Audio command processing module 130 may operate to process and analyze the received audio data to recognize a verbal command of user 132. Audio command processing module 130 may then forward the verbal command back to media device 106 for processing.

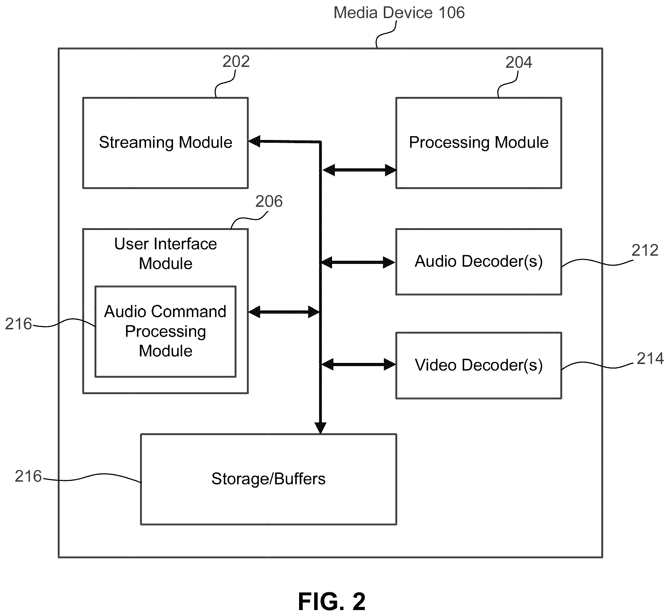

In some embodiments, the audio data may be alternatively or additionally processed and analyzed by an audio command processing module 216 in media device 106 (see FIG. 2). Media device 106 and system servers 126 may then cooperate to pick one of the verbal commands to process (either the verbal command recognized by audio command processing module 130 in system servers 126, or the verbal command recognized by audio command processing module 216 in media device 106).

FIG. 2 illustrates a block diagram of an example media device 106, according to some embodiments. Media device 106 may include a streaming module 202, a processing module 204, storage/buffers 208, and a user interface module 206. As described above, user interface module 206 may include audio command processing module 216.

Media device 106 may also include one or more audio decoders 212 and one or more video decoders 214.

Each audio decoder 212 may be configured to decode audio of one or more audio formats, such as but not limited to AAC, HE-AAC, AC3 (Dolby Digital), EAC3 (Dolby Digital Plus), WMA, WAV, PCM, MP3, OGG GSM, FLAC, AU, AIFF, and/or VOX, to name just some examples.

Similarly, each video decoder 214 may be configured to decode video of one or more video formats, such as but not limited to MP4 (mp4, m4a, m4v, f4v, f4a, m4b, m4r, f4b, mov), 3GP (3gp, 3gp2, 3g2, 3gpp, 3gpp2), OGG (ogg, oga, ogv, ogx), WMV (wmv, wma, asf), WEBM, FLV, AVI, QuickTime, HDV, MXF (OP1a, OP-Atom), MPEG-TS, MPEG-2 PS, MPEG-2 TS, WAV, Broadcast WAV, LXF, GXF, and/or VOB, to name just some examples. Each video decoder 214 may include one or more video codecs, such as but not limited to H.263, H.264, H.265, AVI, HEV, MPEG1, MPEG2, MPEG-TS, MPEG-4, Theora, 3GP, DV, DVCPRO, DVCPRO, DVCProHD, IMX, XDCAM HD, XDCAM HD422, and/or XDCAM EX, to name just some examples.

Streaming module 202 of media device 106 may be configured to receive image information from image capturing device 134. In some aspects, the image information may comprise LECI frame generated by a low-power processor of the image-capturing device 134. In some aspects, the image information may comprise a sequence of image frames recorded by the image-capturing device 134 and an indication (e.g., a flag, a bit in a header of a packet) that the media device 106 can generate a LECI frame from the provided image information. For example, processing module 204 may receive the sequence of image frames from image capturing device 134 and generate a LECI frame from the provided sequence. In this manner, image-capturing device 134 may offload LECI processing to the media device 106. For example, image-capturing device 134 may determine it lacks sufficient processing power or electrical power (e.g., a low battery) to generate LECI frames and, instead, transmits the recorded sequence of image frames to media device 106.

Now referring to both FIGS. 1 and 2, in some embodiments, user 132 may interact with media device 106 via, for example, remote control 110. For example, user 132 may use remote control 110 to interact with user interface module 206 of media device 106 to select a content item, such as a movie, TV show, music, book, application, game, etc. In response to the user selection, streaming module 202 of media device 106 may request the selected content item from content server(s) 120 over network 118. Content server(s) 120 may transmit the requested content item to streaming module 202. Media device 106 may transmit the received content item to display device 108 for playback to user 132.

In some aspects, media device 106 may display an interface for interacting with the sequence of image frames provided by image capturing device 134. For example, the interface may display selectable options for generating LECI frames based on the sequence of image frames. One example of a selectable option is the duration of time (e.g., 1 minute, 5 minutes) of the sequence of images for which to generate the LECI images. Another example includes the types of annotations or effects (e.g., arrows, heat maps, highlighting, blurring) to be added to the LECI to represent actions or objects detected within the frames of the sequence of frames.

In streaming embodiments, streaming module 202 may transmit the content item to display device 108 in real time or near real time as it receives such content item from content server(s) 120. In non-streaming embodiments, media device 106 may store the content item received from content server(s) 120 in storage/buffers 208 for later playback on display device 108.

### Deduplication of live video content

Multimedia environment 100 may access media content from multiple media content providers. According to some aspects, the same video program may be accessed from more than one of these media content providers. For example, a video program that is made available at one of the content servers 102 by a VOD content provider may also be received as a live stream (e.g., over the air (OTA) or over the top (OTT)) from a live content provider, such as via a linear delivery channel. Although it is the same video program, since they are obtained from different content providers, the live video program and the VOD video program may be assigned different content identifiers (e.g., Gracenote IDs). Since the content IDs link to respective metadata, the live video program and the VOD video program may be linked to respective copies of metadata corresponding to the video program.

According to some aspects, the metadata (e.g., metadata 124) received from live content providers (e.g., via content server 120) is often of poorer quality than that received from VOD content providers (e.g., via content server 120). Hence, the metadata of the live video program may be sparse and inadequate compared to the metadata of the VOD video program. According to some aspects, deduplication of the live content involves identifying a VOD video program that matches the live video program and replacing the content identifier (ID) of the live video program with the content ID of the matching VOD program. In an embodiment, deduplicating the live video program enables linking the live video program with VOD metadata. According to some aspects, deduplication involves ensuring that a video program, regardless of whether it is available as a live program or a VOD program, is recognized using a consistent content ID. Deduplication allows for an improved browsing and search experience and enables the content delivery systems to track combined user engagement across live and VOD programming.

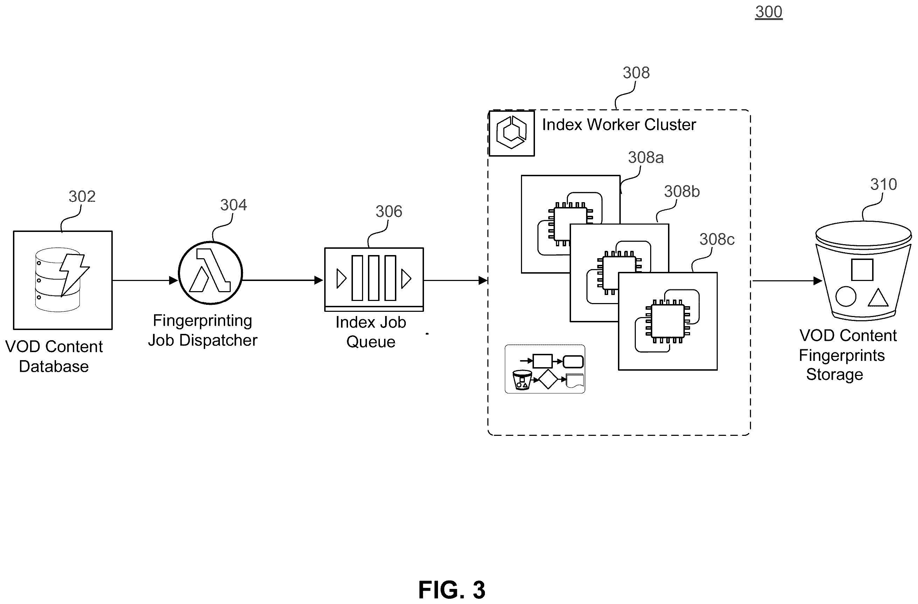

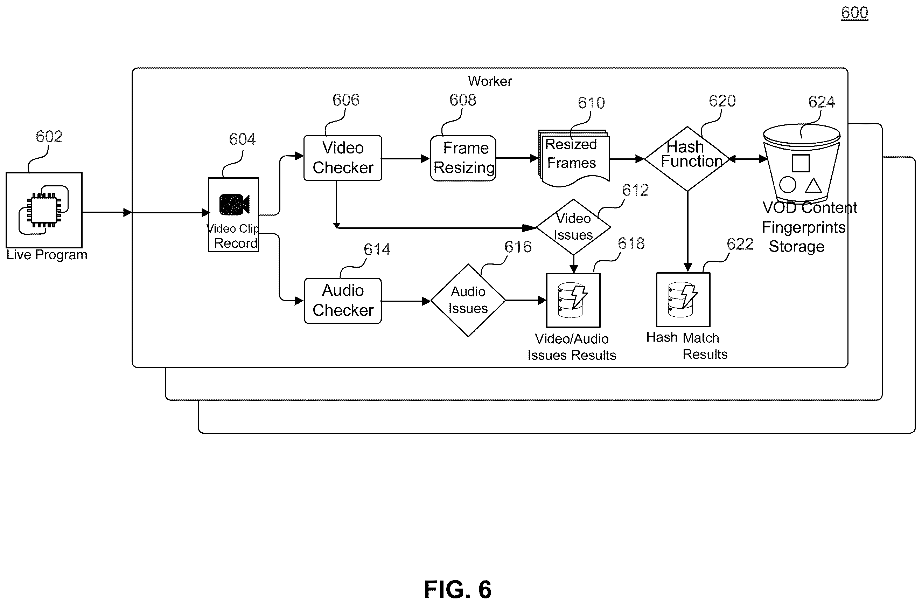

According to some aspects, deduplication of live content can be a two-stage process. First, video fingerprints (e.g., hash character strings) corresponding to all existing VOD content are indexed and stored. Next, video fingerprints (e.g., hash character strings) corresponding to a live program are compared with the indexed VOD video fingerprints to identify a matching VOD program, and the content ID of the matched VOD program is assigned to the live video program. The generation and indexing of VOD video fingerprints shall be described below with reference to the embodiment of system 300 depicted in FIG. 3. The process of identifying a matching VOD program shall be described below with reference to the embodiment of system 600 depicted in FIG. 6.

FIG. 3 illustrates a block diagram of an example system 300 for indexing and storing video image hashes corresponding to the VOD content, according to some aspects of this disclosure. According to some aspects, system 300 can be configured to communicate with media system 104, content server(s) 120, or system server(s) 126 in multimedia environment 102 of FIG. 1.

According to some aspects, system 300 includes VOD content database 302, fingerprinting job dispatcher 304, index job queue 306, index worker cluster 308, and VOD content fingerprints storage 310. According to some aspects, VOD content database 302 may be located on one of the content servers 120. VOD content database 302 may store the VOD content accessible via the multimedia environment 102. According to some aspects, VOD programs are VOD videos such as movies, show episodes, sports programs, and the like. According to some aspects, each of the VOD programs stored in the VOD content database 302 may be assigned a unique content ID (e.g., Gracenote ID). The content IDs link to respective metadata corresponding to the VOD program. According to some aspects, the metadata corresponding to the VOD content may be metadata 124 at the content servers 120.

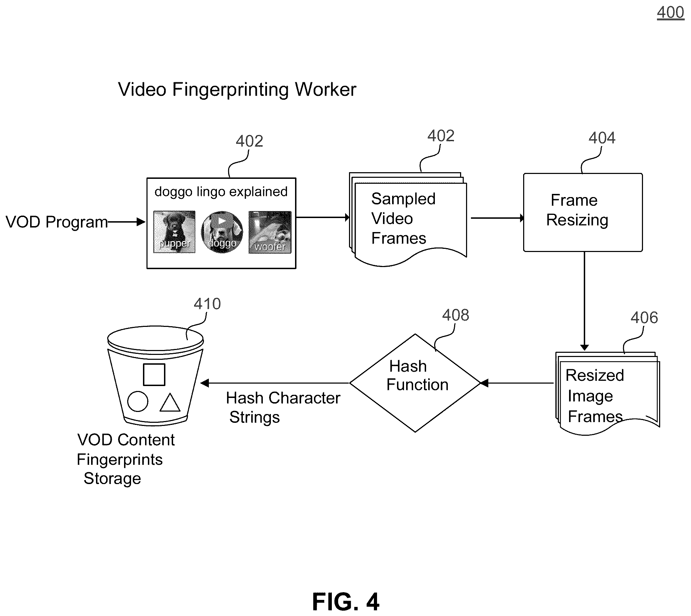

According to some aspects, fingerprinting job dispatcher 304 may retrieve VOD programs from the VOD content database 302 and places the programs into index job queue 306. According to some aspects, fingerprinting job dispatcher 304 may periodically monitor the VOD content database 302 for new content. The index worker cluster 308 retrieves the VOD programs from the index job queue 306 and computes video fingerprints corresponding to each VOD program. The computed video fingerprints are then indexed and stored in a VOD fingerprint storage 310. According to some aspects, VOD fingerprint storage 310 may be located on one of the content servers 120. According to some aspects, index worker cluster 308 includes multiple video fingerprinting workers 308a-308c that may operate sequentially or in parallel. Each video finger printing worker 308a-308c may receive a VOD program as an input and generates, based on the inputted VOD program, one or more video fingerprints, which are unique identifiers corresponding to the input VOD program. An example video finger printing worker is illustrate in FIG. 4.

According to some aspects, video fingerprints generated by the index worker cluster 308 may be based on computing image hashes of the sampled input VOD program. Alternatively or additionally, video fingerprints generated by the index worker cluster 308 may be based on temporal fingerprinting, spatial fingerprinting, transform-domain fingerprinting, or any combination of the foregoing.

According to some aspects, a perceptual hashing algorithm may be used by the index worker cluster 308 to generate VOD video fingerprints. According to some aspects, a perceptual hashing algorithm such as difference hash (dHash), average hash (aHash), perceptual hash (pHash), and wavelet hash (wHash) may be used to generate VOD video fingerprints. According to some aspects, temporal and spatial fingerprinting may be based on scale-invariant feature transform (SIFT) or edge detection techniques. According to some aspects, the transform-domain fingerprinting may be based on discrete cosine transform (DCT) or discrete wavelet transform (DWT).

FIG. 4 illustrates a block diagram of an example video fingerprinting worker 400, according to some aspects of this disclosure. In the example of FIG. 4, the video fingerprinting worker 400 uses image hashing to generate video fingerprints. According to some aspects, video fingerprinting worker 400 may be one of the fingerprinting workers 308a-308c which are part of the index worker cluster 308. According to some aspects, index worker cluster 308 can be configured to communicate with media system 104, content server(s) 120, or system server(s) 126 in multimedia environment 102 of FIG. 1.

FIG. 4 illustrates an example video fingerprinting worker 400. According to some aspects, video fingerprinting worker 400 may receive a VOD program retrieved from VOD content database 302. According to some aspects, VOD programs are VOD videos such as movies, show episodes, sports programs, and the like. According to some aspects, video fingerprinting worker 400 first samples the input VOD program to generate one or more sampled video frames 402. The input VOD program may be sampled at a predefined sampling rate (e.g., 1, 2, or 5 frames per second).

According to some aspects, the sampled video frames 402 are input to a frame resizing module 404 to generate reduced size resized image frames 406. According to some aspects, applying the hash function 408 on resized image frames 406 can be computationally more efficient than applying the hash function on sampled video frames 406.

According to some aspects, the frame resizing module 404 may reduce the dimensions of the input video frames 402 while preserving the intensity values of its pixels. According to some aspects, the frame resizing module 404 may resize the input video frames 402 to greyscale images with reduced dimensions. According to some aspects, to reduce input frame dimensions, the frame resizing module 404 may employ interpolation methods such as nearest-neighbor interpolation, bilinear interpolation, and bicubic interpolation methods. According to some aspects, sampled video frames 402 may be resized using libraries such as OpenCV, PIL in Python, and the like.

According to some aspects, hash function 408 receives the resized image frames 406 as input and generates a hash character strings corresponding to each input resized image frame. According to some aspects, hash function 408 may be based on a perceptual hashing algorithm. According to some aspects, hash function 408 may utilize a perceptual hash such as difference hash (dHash), average hash (aHash), perceptual hash (pHash), and wavelet hash (wHash) function. According to some aspects, perceptual hash functions are designed to generate hash character strings that are perceptually similar for visually similar images. Hence, minor variation such as artifacts or small edits to the hashed images should result in similar hash character strings. Furthermore, the hash character strings generated using perceptual hashing are generally invariant to image resizing and compression operations. According to some aspects, hash character strings corresponding to all the VOD programs in the VOD content database 302 are computed, indexed, and stored in the VOD content fingerprints storage 410.

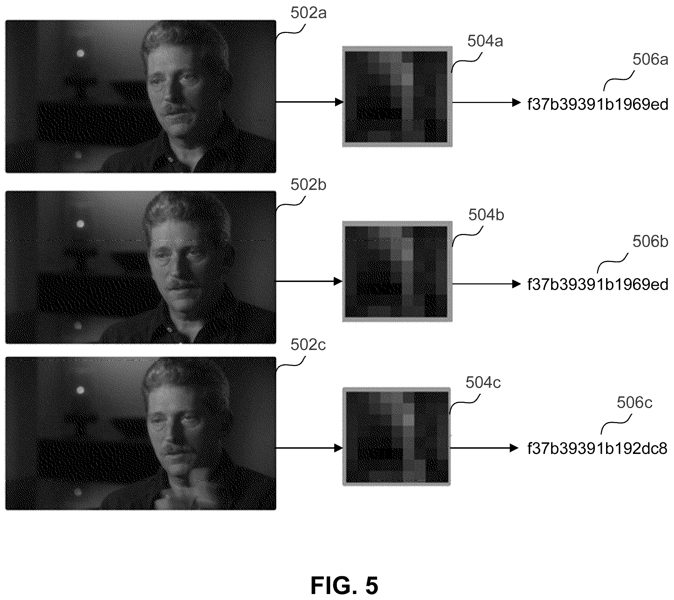

FIG. 5 illustrates examples of video fingerprints generated using a perceptual hashing algorithm, according to some aspects of this disclosure. In the Example of FIG. 5, video frames 502a-502c may correspond to the sampled video frames 406 of FIG. 4, which are obtained by sampling a VOD program at a predefined sampling rate. In the example of FIG. 5, images frames 504a-504c may correspond to the resized image frames 406 of FIG. 4. Hash character strings 506a-506c are the video fingerprints of the VOD program corresponding to the video frames 502a-502c. The hash character strings 506a-506c can be hash values obtained by computing a hash (e.g., dHash) of image frames 504a-504c. Hash character strings generated using perceptual hashing are, in general, invariant to image resizing. Hence, is computationally more efficient to generate the hash character strings based on the smaller image frames 504a-504c, rather than based on the larger video frames 502a-502c, could be computationally more efficient.

According to some aspects, to obtain the sampled video frames 502a-502c, the VOD program may be sampled 'N' times per second (e.g., N=1, 2, or 5). As a result, for an input VOD program having a duration of one hour, video fingerprinting worker 400 generates a sequence of '3600xN' hash character strings.

FIG. 6 illustrates a block diagram of an example deduplication system 600 for deduplication of live video content, according to some aspects of this disclosure. According to some aspects, system 600 can be configured to communicate with media system 104, content server(s) 120, or system server(s) 126 in multimedia environment 102 of FIG. 1.

According to some aspects, deduplication system 600 includes a video clip recording module 604, a video checker module 606, a frame resizing module 608, a hash function module 620, a hash match results database 622, and a VOD content fingerprints storage 624. System 600 also includes an audio checker module 614 and a video/audio issues results database 618.

According to some aspects, a live program 602, along with corresponding metadata, may be received from a live content provider. According to some aspects, the received live program 602 may be associated with a content ID (e.g., Gracenote ID) that links to the received metadata. According to some aspects, deduplication of the live content involves identifying a VOD video program that matches the live program 602 and replacing the content ID of the live program 602 with the content ID of the matching VOD program. Deduplicating the live video program enables linking the live video program with VOD metadata, which is usually of better quality than the metadata received from live content providers.

According to some aspects, to determine a matching VOD program, the video clip recording module 604 records a small portion (e.g., a five-minute recording) of the live program 602. Deduplication system 600 uses the recorded portion of the live program to generate video fingerprints corresponding to live program 602. According to some aspects, to maintain the integrity of deduplication process, the recorded portion of the live program 602 is checked for video and audio quality issues. Information corresponding to video issues 612 and audio issues 616 that are encountered may be stored in the video/audio issues results. According to some aspects, live program 602 received without audio and/or video issues may be sampled to generate one or more sampled video frames. According to some aspects, the received live program may be sampled at a predefined sampling rate (e.g., 1, 2, or 5 frames per second).

According to some aspects, the sampled video frames corresponding to live program 602 are input to a frame resizing module 608 to generate reduced size resized image frames 610. According to some aspects, the frame resizing module 608 may reduce the dimensions of the input video frames while preserving the intensity values of its pixels. According to some aspects, the frame resizing module 608 may resize the input video frames to greyscale images with reduced dimensions. According to some aspects, to reduce input frame dimensions, the frame resizing module 608 may employ interpolation methods such as nearest-neighbor interpolation, bilinear interpolation, and bicubic interpolation methods. According to some aspects, sampled video frames corresponding to live program 602 may be resized using libraries such as OpenCV, PIL in Python, and the like.

According to some aspects, hash function module 620 receives the resized image frames 610 as input and generates a hash character strings corresponding to each input resized image frame. According to some aspects, hash function module 620 may be based on a perceptual hashing algorithm. According to some aspects, hash function module 620 may utilize a perceptual hash such as difference hash (dHash), average hash (aHash), perceptual hash (pHash), and wavelet hash (wHash) function.

According to some aspects, hash function module 620 may generate a sequence of hash character strings corresponding to the recorded portion of live program 602 and query the VOD content fingerprints storage 624 to identify a matching VOD program. According to some aspects, VOD content fingerprints storage 410 may contain hash character strings corresponding to all the VOD programs in the VOD content database 302.

According to some aspects, deduplication system 600 compares the sequence of hash character strings corresponding to live program 602 with the sequences of hash character strings corresponding to the VOD programs. According to some aspects, a sequence of hash character strings corresponding to live program 602 is compared with a sequence of hash character strings corresponding to a VOD program, and the number of hash character strings that match between the two sequences is counted. According to some aspects, if the number of hash character strings that match between the two sequences is greater than a matching-threshold, the live program 602 and the VOD program may be determined to be the same program (i.e., the matched live program 602 and the VOD program are the same program received for two different content providers).

According to some aspects, once a match is identified, the content ID of the live program 602 and the content ID of the matching VOD program may be stored in the hash match results database 622. According to some aspects, deduplication system 600 replaces the content ID of the live program 602 with the content ID of the matching VOD program. Deduplicating the live video program enables linking the live video program with VOD metadata, which is usually of better quality than the metadata received from live content providers. According to some aspects, a media device 106 playing a deduplicated live program utilizes the metadata corresponding to the matched VOD program.

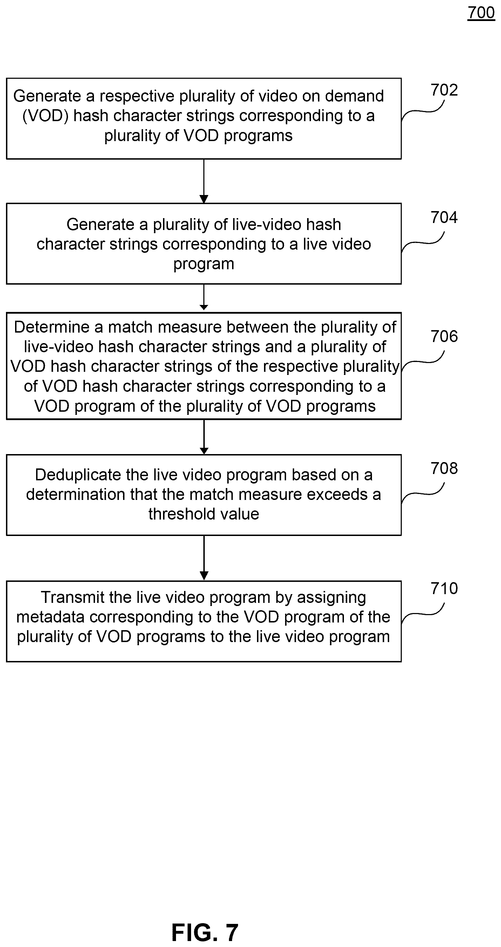

FIG. 7 is a flow diagram for a method 700 for deduplication of live programming, according to some embodiments. Method 700 can be performed by processing logic that can comprise hardware (e.g., circuitry, dedicated logic, programmable logic, microcode, etc.), software (e.g., instructions executing on a processing device), or a combination thereof. It is to be appreciated that not all steps may be needed to perform the disclosure provided herein. Further, some of the steps may be performed simultaneously, or in a different order than shown in FIG. 7, as will be understood by a person of ordinary skill in the art.

Method 700 shall first be described with reference to the embodiment of systems 300, 400 and 600, depicted in FIGs. 3, 4, and 6, although method 700 is not limited to those embodiments.

At 702, a respective plurality of VOD hash character strings corresponding to a plurality of VOD programs is generated. According to some aspects, generating the respective plurality of VOD hash character strings includes sampling the VOD program at a first sampling rate to generate a plurality of VOD frames. A plurality of VOD resized grey scale images corresponding to the plurality of VOD frames are also generated. According to some aspects, the plurality of VOD hash character strings are then generated by computing a respective hash of each of the plurality of VOD resized grey scale images

At 704, a plurality of live-video hash character strings corresponding to a live video program is generated. According to some aspects, generating the plurality of live-video hash character strings corresponding to the live video program may include recording a portion of the live video program, and sampling the portion of the live video program at a second sampling rate to generate a plurality of live-video frames. According to some aspects, a plurality of live-video resized grey scale images corresponding to the plurality of live-video frames are then generated. Furthermore, the plurality of live-video hash character strings are generated by computing a respective hash of each of the plurality of live-video resized grey scale images.

At 706, a match measure between the plurality of live-video hash character strings and a plurality of VOD hash character strings of the respective plurality of VOD hash character strings corresponding to a VOD program of the plurality of VOD programs is determined. According to some aspects, the match measure corresponds to a count of matches between the plurality of live-video hash character strings and a portion of the plurality of VOD hash character strings of the respective plurality of VOD hash character strings. According to some aspects, a sequence of hash character strings corresponding to live video is compared with a sequence of hash character strings corresponding to the VOD program, and a match measure is determined by counting the number of hash character strings that match between the two sequences.

At 708, deduplication of the live video program is performed based on a determination that the match measure exceeds a threshold value. According to some aspects, if the match measure (i.e., the number of hash character strings that match between the two sequences) is greater than a matching-threshold, the live program and the VOD program may be determined to be the same program (i.e., the matched live program and the VOD program are the same program received for two different content providers).

According to some aspects, deduplication of the live content involves identifying a VOD video program that matches the live video program and swapping the content ID of the live video program with the content ID of the matching VOD program. Deduplicating the live video program enables linking the live video program with VOD metadata, which is usually of better quality than the metadata received from live content providers.

At 710, the live video program is transmitted by assigning metadata corresponding to the VOD program of the plurality of VOD programs to the live video program. According to some aspects, a media device 106 playing a deduplicated live program utilizes the metadata corresponding to the matched VOD program.

### Example Computer System

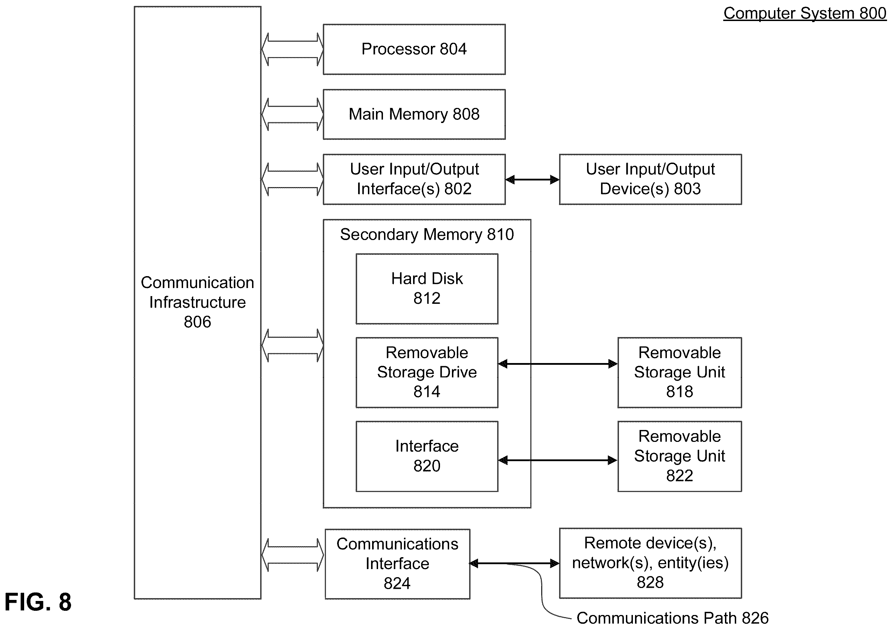

Various embodiments may be implemented, for example, using one or more well-known computer systems, such as computer system 800 shown in FIG. 8. For example, the media device 106 may be implemented using combinations or sub-combinations of computer system 800. Also or alternatively, one or more computer systems 800 may be used, for example, to implement any of the embodiments discussed herein, as well as combinations and sub-combinations thereof. Computer system 800 may include one or more processors (also called central processing units, or CPUs), such as a processor 804. Processor 804 may be connected to a communication infrastructure or bus 806.

Computer system 800 may also include user input/output device(s) 803, such as monitors, keyboards, pointing devices, etc., which may communicate with communication infrastructure 806 through user input/output interface(s) 802.

One or more of processors 804 may be a graphics processing unit (GPU). In an embodiment, a GPU may be a processor that is a specialized electronic circuit designed to process mathematically intensive applications. The GPU may have a parallel structure that is efficient for parallel processing of large blocks of data, such as mathematically intensive data common to computer graphics applications, images, videos, etc.

Computer system 800 may also include a main or primary memory 808, such as random access memory (RAM). Main memory 808 may include one or more levels of cache. Main memory 808 may have stored therein control logic (i.e., computer software) and/or data.

Computer system 800 may also include one or more secondary storage devices or memory 810. Secondary memory 810 may include, for example, a hard disk drive 812 and/or a removable storage device or drive 814. Removable storage drive 814 may be a floppy disk drive, a magnetic tape drive, a compact disk drive, an optical storage device, tape backup device, and/or any other storage device/drive.

Removable storage drive 814 may interact with a removable storage unit 818. Removable storage unit 818 may include a computer usable or readable storage device having stored thereon computer software (control logic) and/or data. Removable storage unit 818 may be a floppy disk, magnetic tape, compact disk, DVD, optical storage disk, and/ any other computer data storage device. Removable storage drive 814 may read from and/or write to removable storage unit 818.

Secondary memory 810 may include other means, devices, components, instrumentalities or other approaches for allowing computer programs and/or other instructions and/or data to be accessed by computer system 800. Such means, devices, components, instrumentalities or other approaches may include, for example, a removable storage unit 822 and an interface 820. Examples of the removable storage unit 822 and the interface 820 may include a program cartridge and cartridge interface (such as that found in video game devices), a removable memory chip (such as an EPROM or PROM) and associated socket, a memory stick and USB or other port, a memory card and associated memory card slot, and/or any other removable storage unit and associated interface.

Computer system 800 may further include a communication or network interface 824. Communication interface 824 may enable computer system 800 to communicate and interact with any combination of external devices, external networks, external entities, etc. (individually and collectively referenced by reference number 828). For example, communication interface 824 may allow computer system 800 to communicate with external or remote devices 828 over communications path 826, which may be wired and/or wireless (or a combination thereof), and which may include any combination of LANs, WANs, the Internet, etc. Control logic and/or data may be transmitted to and from computer system 800 via communication path 826.

Computer system 800 may also be any of a personal digital assistant (PDA), desktop workstation, laptop or notebook computer, netbook, tablet, smart phone, smart watch or other wearable, appliance, part of the Internet-of-Things, and/or embedded system, to name a few non-limiting examples, or any combination thereof.

Computer system 800 may be a client or server, accessing or hosting any applications and/or data through any delivery paradigm, including but not limited to remote or distributed cloud computing solutions; local or on-premises software ("on-premise" cloud-based solutions); "as a service" models (e.g., content as a service (CaaS), digital content as a service (DCaaS), software as a service (SaaS), managed software as a service (MSaaS), platform as a service (PaaS), desktop as a service (DaaS), framework as a service (FaaS), backend as a service (BaaS), mobile backend as a service (MBaaS), infrastructure as a service (IaaS), etc.); and/or a hybrid model including any combination of the foregoing examples or other services or delivery paradigms.

Any applicable data structures, file formats, and schemas in computer system 800 may be derived from standards including but not limited to JavaScript Object Notation (JSON), Extensible Markup Language (XML), Yet Another Markup Language (YAML), Extensible Hypertext Markup Language (XHTML), Wireless Markup Language (WML), MessagePack, XML User Interface Language (XUL), or any other functionally similar representations alone or in combination. Alternatively, proprietary data structures, formats or schemas may be used, either exclusively or in combination with known or open standards.

In some embodiments, a tangible, non-transitory apparatus or article of manufacture comprising a tangible, non-transitory computer useable or readable medium having control logic (software) stored thereon may also be referred to herein as a computer program product or program storage device. This includes, but is not limited to, computer system 800, main memory 808, secondary memory 810, and removable storage units 818 and 822, as well as tangible articles of manufacture embodying any combination of the foregoing. Such control logic, when executed by one or more data processing devices (such as computer system 800 or processor(s) 804), may cause such data processing devices to operate as described herein.

Based on the teachings contained in this disclosure, it will be apparent to persons skilled in the relevant art(s) how to make and use embodiments of this disclosure using data processing devices, computer systems and/or computer architectures other than that shown in FIG. 8. In particular, embodiments can operate with software, hardware, and/or operating system implementations other than those described herein.

### Conclusion

It is to be appreciated that the Detailed Description section, and not any other section, is intended to be used to interpret the claims. Other sections can set forth one or more but not all exemplary embodiments as contemplated by the inventor(s), and thus, are not intended to limit this disclosure or the appended claims in any way.

While this disclosure describes exemplary embodiments for exemplary fields and applications, it should be understood that the disclosure is not limited thereto. Other embodiments and modifications thereto are possible, and are within the scope and spirit of this disclosure. For example, and without limiting the generality of this paragraph, embodiments are not limited to the software, hardware, firmware, and/or entities illustrated in the figures and/or described herein. Further, embodiments (whether or not explicitly described herein) have significant utility to fields and applications beyond the examples described herein.

Embodiments have been described herein with the aid of functional building blocks illustrating the implementation of specified functions and relationships thereof. The boundaries of these functional building blocks have been arbitrarily defined herein for the convenience of the description. Alternate boundaries can be defined as long as the specified functions and relationships (or equivalents thereof) are appropriately performed. Also, alternative embodiments can perform functional blocks, steps, operations, methods, etc. using orderings different than those described herein.

References herein to "one embodiment," "an embodiment," "an example embodiment," or similar phrases, indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it would be within the knowledge of persons skilled in the relevant art(s) to incorporate such feature, structure, or characteristic into other embodiments whether or not explicitly mentioned or described herein. Additionally, some embodiments can be described using the expression "coupled" and "connected" along with their derivatives. These terms are not necessarily intended as synonyms for each other. For example, some embodiments can be described using the terms "connected" and/or "coupled" to indicate that two or more elements are in direct physical or electrical contact with each other. The term "coupled," however, can also mean that two or more elements are not in direct contact with each other, but yet still co-operate or interact with each other.

The breadth and scope of this disclosure should not be limited by any of the above-described exemplary embodiments, but should be defined only in accordance with the following claims and their equivalents.

### Numbered aspects

By way of non-limiting example, some aspects of the disclosure are set out in the following numbered clauses.
Numbered Clause 1. A computer-implemented method for deduplication of live programming, comprising:
   generating, by at least one computer processor, a respective plurality of video on demand (VOD) hash character strings corresponding to a plurality of VOD programs;
   generating a plurality of live-video hash character strings corresponding to a live video program;
   determining a match measure between the plurality of live-video hash character strings and a plurality of VOD hash character strings of the respective plurality of VOD hash character strings corresponding to a VOD program of the plurality of VOD programs;
   deduplicating the live video program based on a determination that the match measure exceeds a threshold value; and
   transmitting the live video program by assigning metadata corresponding to the VOD program of the plurality of VOD programs to the live video program.
Numbered Clause 2. The method of Numbered Clause 1, wherein the generating the respective plurality of VOD hash character strings corresponding to the plurality of VOD programs comprises:
   sampling the VOD program of the plurality of VOD programs at a first sampling rate to generate a plurality of VOD frames;
   generating a plurality of VOD resized grey scale images corresponding to the plurality of VOD frames; and
   generating the plurality of VOD hash character strings by computing a respective hash of each of the plurality of VOD resized grey scale images.
Numbered Clause 3. The method of Numbered Clause 1 or 2, wherein the generating the plurality of live-video hash character strings corresponding to the live video program comprises:
   recording a portion of the live video program; and
   sampling the portion of the live video program at a second sampling rate to generate a plurality of live-video frames.
Numbered Clause 4. The method of Numbered Clause 3, further comprises:
   generating a plurality of live-video resized grey scale images corresponding to the plurality of live-video frames; and
   generating the plurality of live-video hash character strings by computing a respective hash of each of the plurality of live-video resized grey scale images.
Numbered Clause 5. The method of any preceding Numbered Clause, wherein match measure corresponds to a count of matches between the plurality of live-video hash character strings and a portion of the plurality of VOD hash character strings of the respective plurality of VOD hash character strings.
Numbered Clause 6. The method of any preceding Numbered Clause, wherein the plurality of live-video hash character strings and a portion of the plurality of VOD hash character strings of the respective plurality of VOD hash character strings are computed using a perceptual hash algorithm.
Numbered Clause 7. The method of any preceding Numbered Clause, wherein the deduplicating the live video program comprises:
   replacing a content identifier corresponding to the live video program with a content identifier corresponding to the VOD program of the plurality of VOD programs.
Numbered Clause 8. The method of Numbered Clause 7, wherein the content identifier corresponding to the VOD program is a Gracenote identifier.
Numbered Clause 9. A system, comprising:
   one or more memories; and
   at least one processor each coupled to at least one of the memories and configured to perform operations comprising:
      generating, by at least one computer processor, a respective plurality of video on demand (VOD) hash character strings corresponding to a plurality of VOD programs;
      generating a plurality of live-video hash character strings corresponding to a live video program;
      determining a match measure between the plurality of live-video hash character strings and a plurality of VOD hash character strings of the respective plurality of VOD hash character strings corresponding to a VOD program of the plurality of VOD programs; and
      deduplicating the live video program based on a determination that the match measure exceeds a threshold value; and
      transmitting the live video program by assigning metadata corresponding to the VOD program of the plurality of VOD programs to the live video program.
Numbered Clause 10. The system of Numbered Clause 9, wherein to generate the respective plurality of VOD hash character strings corresponding to the plurality of VOD programs, the operations comprise:
   sampling the VOD program of the plurality of VOD programs at a first sampling rate to generate a plurality of VOD frames;
   generating a plurality of VOD resized grey scale images corresponding to the plurality of VOD frames; and
   generating the plurality of VOD hash character strings by computing a respective hash of each of the plurality of VOD resized grey scale images.
Numbered Clause 11. The system of Numbered Clause 9 or 10, wherein to generate the plurality of live-video hash character strings corresponding to the live video program, the operations comprise:
   recording a portion of the live video program; and
   sampling the portion of the live video program at a second sampling rate to generate a plurality of live-video frames.
Numbered Clause 12. The system of Numbered Clause 11, the operations further comprise:
   generating a plurality of live-video resized grey scale images corresponding to the plurality of live-video frames; and
   generating the plurality of live-video hash character strings by computing a respective hash of each of the plurality of live-video resized grey scale images.
Numbered Clause 13. The system of any of Numbered Clauses 9 to 12, wherein match measure corresponds to a count of matches between the plurality of live-video hash character strings and a portion of the plurality of VOD hash character strings of the respective plurality of VOD hash character strings.
Numbered Clause 14. The system of any of Numbered Clauses 9 to 13, wherein the plurality of live-video hash character strings and a portion of the plurality of VOD hash character strings of the respective plurality of VOD hash character strings are computed using a perceptual hash algorithm.
Numbered Clause 15. The system of any of Numbered Clauses 9 to 14, wherein to deduplicate the live video program, the operations comprise:
   replacing a content identifier corresponding to the live video program with a content identifier corresponding to the VOD program of the plurality of VOD programs.
Numbered Clause 16. A non-transitory computer-readable medium having instructions stored thereon that, when executed by at least one computing device, cause the at least one computing device to perform operations comprising:
   generating, by at least one computer processor, a respective plurality of video on demand (VOD) hash character strings corresponding to a plurality of VOD programs;
   generating a plurality of live-video hash character strings corresponding to a live video program;
   determining a match measure between the plurality of live-video hash character strings and a plurality of VOD hash character strings of the respective plurality of VOD hash character strings corresponding to a VOD program of the plurality of VOD programs; and
   assigning metadata corresponding to the VOD program of the plurality of VOD programs to the live video program based on a determination that the match measure exceeds a threshold value.
Numbered Clause 17. The non-transitory computer-readable medium of Numbered Clause 16, wherein to generate the respective plurality of VOD hash character strings corresponding to the plurality of VOD programs, the operations comprise:
   sampling the VOD program of the plurality of VOD programs at a first sampling rate to generate a plurality of VOD frames;
   generating a plurality of VOD resized grey scale images corresponding to the plurality of VOD frames; and
   generating the plurality of VOD hash character strings by computing a respective hash of each of the plurality of VOD resized grey scale images.
Numbered Clause 18. The non-transitory computer-readable medium of Numbered Clause 16 or 17, wherein to generate the plurality of live-video hash character strings corresponding to the live video program, the operations comprise:
   recording a portion of the live video program; and
   sampling the portion of the live video program at a second sampling rate to generate a plurality of live-video frames.
Numbered Clause 19. The non-transitory computer-readable medium of Numbered Clause 18, the operations further comprise:
   generating a plurality of live-video resized grey scale images corresponding to the plurality of live-video frames; and
   generating the plurality of live-video hash character strings by computing a respective hash of each of the plurality of live-video resized grey scale images.
Numbered Clause 20. The non-transitory computer-readable medium of any of Numbered Clauses 16 to 19, wherein match measure corresponds to a count of matches between the plurality of live-video hash character strings and a portion of the plurality of VOD hash character strings of the respective plurality of VOD hash character strings

## Claims

1. A computer-implemented method for deduplication of live programming, comprising:
generating, by at least one computer processor, a respective plurality of video on demand (VOD) hash character strings corresponding to a plurality of VOD programs;
generating a plurality of live-video hash character strings corresponding to a live video program;
determining a match measure between the plurality of live-video hash character strings and a plurality of VOD hash character strings of the respective plurality of VOD hash character strings corresponding to a VOD program of the plurality of VOD programs;
deduplicating the live video program based on a determination that the match measure exceeds a threshold value; and
transmitting the live video program by assigning metadata corresponding to the VOD program of the plurality of VOD programs to the live video program.

2. The method of claim 1, wherein the generating the respective plurality of VOD hash character strings corresponding to the plurality of VOD programs comprises:
sampling the VOD program of the plurality of VOD programs at a first sampling rate to generate a plurality of VOD frames;
generating a plurality of VOD resized grey scale images corresponding to the plurality of VOD frames; and
generating the plurality of VOD hash character strings by computing a respective hash of each of the plurality of VOD resized grey scale images.

3. The method of claim 1 or 2, wherein the generating the plurality of live-video hash character strings corresponding to the live video program comprises:
recording a portion of the live video program; and
sampling the portion of the live video program at a second sampling rate to generate a plurality of live-video frames,
preferably further comprising:
generating a plurality of live-video resized grey scale images corresponding to the plurality of live-video frames; and
generating the plurality of live-video hash character strings by computing a respective hash of each of the plurality of live-video resized grey scale images.

4. The method of any preceding claim, wherein match measure corresponds to a count of matches between the plurality of live-video hash character strings and a portion of the plurality of VOD hash character strings of the respective plurality of VOD hash character strings.

5. The method of any preceding claim, wherein the plurality of live-video hash character strings and a portion of the plurality of VOD hash character strings of the respective plurality of VOD hash character strings are computed using a perceptual hash algorithm.

6. The method of any preceding claim, wherein the deduplicating the live video program comprises:
replacing a content identifier corresponding to the live video program with a content identifier corresponding to the VOD program of the plurality of VOD programs,
preferably wherein the content identifier corresponding to the VOD program is a Gracenote identifier.

7. A system, comprising:
one or more memories; and
at least one processor each coupled to at least one of the memories and configured to perform operations comprising:
generating, by at least one computer processor, a respective plurality of video on demand (VOD) hash character strings corresponding to a plurality of VOD programs;
generating a plurality of live-video hash character strings corresponding to a live video program;
determining a match measure between the plurality of live-video hash character strings and a plurality of VOD hash character strings of the respective plurality of VOD hash character strings corresponding to a VOD program of the plurality of VOD programs; and
deduplicating the live video program based on a determination that the match measure exceeds a threshold value; and
transmitting the live video program by assigning metadata corresponding to the VOD program of the plurality of VOD programs to the live video program.

8. The system of claim 7, wherein to generate the respective plurality of VOD hash character strings corresponding to the plurality of VOD programs, the operations comprise:
sampling the VOD program of the plurality of VOD programs at a first sampling rate to generate a plurality of VOD frames;
generating a plurality of VOD resized grey scale images corresponding to the plurality of VOD frames; and
generating the plurality of VOD hash character strings by computing a respective hash of each of the plurality of VOD resized grey scale images.

9. The system of claim 7 or 8, wherein to generate the plurality of live-video hash character strings corresponding to the live video program, the operations comprise:
recording a portion of the live video program; and
sampling the portion of the live video program at a second sampling rate to generate a plurality of live-video frames,
preferably wherein the operations further comprise:
generating a plurality of live-video resized grey scale images corresponding to the plurality of live-video frames; and
generating the plurality of live-video hash character strings by computing a respective hash of each of the plurality of live-video resized grey scale images.

10. The system of any of claims 7 to 9, wherein match measure corresponds to a count of matches between the plurality of live-video hash character strings and a portion of the plurality of VOD hash character strings of the respective plurality of VOD hash character strings.

11. The system of any of claims 7 to 10, wherein the plurality of live-video hash character strings and a portion of the plurality of VOD hash character strings of the respective plurality of VOD hash character strings are computed using a perceptual hash algorithm.

12. The system of any of claims 7 to 11, wherein to deduplicate the live video program, the operations comprise:
replacing a content identifier corresponding to the live video program with a content identifier corresponding to the VOD program of the plurality of VOD programs.

13. A non-transitory computer-readable medium having instructions stored thereon that, when executed by at least one computing device, cause the at least one computing device to perform operations comprising:
generating, by at least one computer processor, a respective plurality of video on demand (VOD) hash character strings corresponding to a plurality of VOD programs;
generating a plurality of live-video hash character strings corresponding to a live video program;
determining a match measure between the plurality of live-video hash character strings and a plurality of VOD hash character strings of the respective plurality of VOD hash character strings corresponding to a VOD program of the plurality of VOD programs; and
assigning metadata corresponding to the VOD program of the plurality of VOD programs to the live video program based on a determination that the match measure exceeds a threshold value.

14. The non-transitory computer-readable medium of claim 13, wherein to generate the respective plurality of VOD hash character strings corresponding to the plurality of VOD programs, the operations comprise:
sampling the VOD program of the plurality of VOD programs at a first sampling rate to generate a plurality of VOD frames;
generating a plurality of VOD resized grey scale images corresponding to the plurality of VOD frames; and
generating the plurality of VOD hash character strings by computing a respective hash of each of the plurality of VOD resized grey scale images.

15. The non-transitory computer-readable medium of claim 13 or 14, wherein to generate the plurality of live-video hash character strings corresponding to the live video program, the operations comprise:
recording a portion of the live video program; and
sampling the portion of the live video program at a second sampling rate to generate a plurality of live-video frames,
preferably wherein the operations further comprise:
generating a plurality of live-video resized grey scale images corresponding to the plurality of live-video frames; and
generating the plurality of live-video hash character strings by computing a respective hash of each of the plurality of live-video resized grey scale images,
optionally wherein match measure corresponds to a count of matches between the plurality of live-video hash character strings and a portion of the plurality of VOD hash character strings of the respective plurality of VOD hash character strings.
